# EUROPÄISCHE PATENTANMELDUNG

(11) **EP 4 056 474 A1**
(43) Veröffentlichungstag der Anmeldung: **14.09.2022**
(21) Anmeldenummer: 22160977.9
(22) Anmeldetag: 09.03.2022
(51) Int. Cl.: B64D 11/06

(54) **FLUGZEUGSITZ, INSBESONDERE PASSAGIER-FLUGZEUGSITZ**

(30) Priorität: 10.03.2021 DE 102021105775
(71) Anmelder: EME Elektro-Metall Export GmbH, 85053 Ingolstadt (DE)
(72) Erfinder: Brand, Dominik, 85057 Ingolstadt (DE)
(74) Vertreter: Liebl, Thomas

(57) **Zusammenfassung**

Die Erfindung betrifft einen Flugzeugsitz, insbesondere Passagier-Flugzeugsitz (1), mit wenigstens einem verschiebbaren und/oder verkippbaren und/oder verdrehbaren Sitzelement (6, 7, 8, 9, 10), das mittels eines elektromotorisch antreibbaren Stellantriebs (15, 16) bezüglich eines Sitzmodulkörpers (2) oder bezüglich eines anderen zugeordneten Sitzelements in seiner Lage verstellbar ist durch eine relative Abstandsverstellung zwischen einer Abstützverbindung am verstellbaren Sitzelement und einer Abstützverbindung am Sitzmodulkörper (2) oder an einem anderen zugeordneten Sitzelement, wobei der Stellantrieb (15, 16) eine Gewindespindel (17) und eine Spindelmutter (24) aufweist, die relativ zueinander verstellbar sind. Erfindungsgemäß weist die Gewindespindel (17) an einem Spindelende ein Anschlusselement (18) auf, mit dem die Gewindespindel (17) rotationshemmend an einer Abstützverbindung angeschlossen ist. Die auf die Gewindespindel (17) aufgeschraubte und elektromotorisch drehantreibbare Spindelmutter (24) ist in einem Käfiggehäuse (20) aufgenommen, das an einer dem Käfiggehäuse (20) zugeordneten weiteren Abstützverbindung rotationsfrei angeschlossen ist, und die Spindelmutter (24) ist mittels eines Elektromotors (23) gesteuert im Käfiggehäuse (20) drehantreibbar und im Käfiggehäuse (20) beidseitig in Spindelaxialrichtung direkt oder indirekt abgestützt, so dass die Gewindespindel (17) rotationsfrei und bezüglich der Spindelmutter (24) ein- und ausfahrbar ist.

## Beschreibung

Die Erfindung betrifft einen Flugzeugsitz, insbesondere Passagier-Flugzeugsitz nach dem Oberbegriff des Anspruches 1.

Flugzeugsitze, insbesondere Passagier-Flugzeugsitze sind Spezialsitze, die durch den Flugbetrieb bedingte funktionale und flugzeugspezifisch durch Vorschriften vorgegebene Anforderungen erfüllen müssen. Bei der Entwicklung und Herstellung eines Flugzeugsitzes sind insbesondere sicherheitstechnische Anforderungen, wie die Funktionssicherheit, zulässige Materialien, Brandschutzvorgaben, etc. sowie eine bequeme und einfache Benutzung durch einen Flugpassagier zu berücksichtigen.

Ein allgemein bekannter Flugzeugsitz als Passagier-Flugzeugsitz besteht aus einem Sitzmodulkörper, gegebenenfalls als zweisitzige oder mehrsitzige Einheit, mit einem verkleideten Fußteil, das mit einer Kabinenbodenwand ortsfest verbindbar ist, mit einer Rückwand und mit beidseitigen Seitenwangen als Armstützen und mit jeweils einer Armstütze zwischen den Sitzplätzen, insbesondere zur Aufnahme von Halterungen, sowie von Funktions- und Steuerungselementen.

Im und am Sitzmodulkörper sind im Bereich zwischen den Armstützen und der Rückwand für jeden Sitzplatz verlagerbare Sitzelemente als Polsterelemente, insbesondere ein Sitzauflageelement, ein Rückenlehnenelement mit Kopfstütze, wenigstens ein Beinauflageelement und ein Fußauflageelement angeordnet. Die Sitzelemente sind bezüglich des Sitzmodulkörpers und gegebenenfalls gegeneinander elektromotorisch mittels Stellantrieben individuell einstellbar, um einem Flugpassagier durch unterschiedlich einstellbare Sitzpositionen bis gegebenenfalls zu einer Liegeposition einen angenehmen und bequemen Flug, beispielsweise einen zeitintensiven Langstreckenflug zu ermöglichen.

Die hier verwendeten Stellantriebe müssen den flugbetriebbedingten Anforderungen, insbesondere hinsichtlich Sicherheitskriterien, der Funktionssicherheit sowie der Materialwahl erfüllen. Zudem sollen solche Stellantriebe möglichst geräuscharm arbeiten, für einen effizienten Flugbetrieb möglichst gewichtsgünstig bei geringem Bauraum sein und möglichst kostengünstig herstellbar sein.

Ein bekannter Flugzeugsitz-Stellantrieb verwendet zur Erzeugung der Linearbewegung eine rotierende Gewindespindel mit einer nicht drehenden Spindelmutter, wobei der spindelrotierende Elektromotor achsparallel zur Gewindespindel angeordnet ist. Alle verwendeten Zahnräder bestehen aus einsatzgehärtetem Stahl und radiale und axiale Lagerungen sind mittels StahlKugellagern und Stahl-Nadellagern ausgeführt. Zudem weist die bewegte, nicht drehende Spindelmutter als Abtriebsbauteil einen zylindrischen Stößel auf, der mit der Spindelmutter verbunden ist. Der Stößel wird über eine Längsnut geführt und so gegen Verdrehung gesichert.

Aufgabe der Erfindung ist es, einen gattungsgemäßen Flugzeugsitz, insbesondere als Passagier-Flugzeugsitz mit Stellantrieben so weiterzubilden, dass flugzeugspezifische Anforderungen insbesondere im Hinblick auf die Funktionssicherheit, Materialwahl, Geräuschentwicklung, Gewichtsreduzierung und Kosteneinsparung besser erfüllbar sind.

Diese Aufgabe wird mit den Merkmalen des Anspruches 1 gelöst.

Gemäß Anspruch 1 weist ein Flugzeugsitz, insbesondere ein Passagier-Flugzeugsitz wenigstens ein verschiebbares und/oder verkippbares und/oder verdrehbares Sitzelement auf, das mittels eines elektromotorisch antreibbaren Stellantriebs bezüglich eines Sitzmodulkörpers oder bezüglich eines anderen zugeordneten Sitzelements in seiner Lage verstellbar ist durch eine relative Abstandsverstellung zwischen einer Abstützverbindung am verstellbaren Sitzelement und einer Abstützverbindung am Sitzmodulkörper oder an einem anderen zugeordneten Sitzelement. Der Stellantrieb weist dabei eine Gewindespindel und eine Spindelmutter auf, die relativ zueinander verstellbar sind. Die Gewindespindel, vorzugsweise mit einem Trapezgewinde, ist erfindungsgemäß mit einem endseitigen Anschlusselement rotationshemmend an einer Abstützverbindung angeschlossen. Die auf die Gewindespindel aufgeschraubte und elektromotorisch drehantreibbare Spindelmutter ist in einem Käfiggehäuse aufgenommen, das an einer dem Käfiggehäuse zugeordneten weiteren Abstützverbindung ebenfalls rotationsfrei angeschlossen ist. Die Spindelmutter ist mittels eines Elektromotors gesteuert im Käfiggehäuse drehantreibbar und zudem im Käfiggehäuse beidseitig in Spindelaxialrichtung direkt oder indirekt abgestützt, so dass die Gewindespindel rotationsfrei und bezüglich der Spindelmutter ein- und ausfahrbar ist.

Gegenüber dem oben angegebenen Stand der Technik wird hier die Linearbewegung im Stellantrieb nach einem grundsätzlich anderen Prinzip erzeugt, indem nicht eine rotierende Gewindespindel in einer nicht drehenden Spindelmutter sondern eine nicht drehende Gewindespindel in einer rotierenden Spindelmutter bewegt wird. Dieses hier verwendete Linearbewegungsprinzip ermöglicht einen konstruktiven Aufbau des Stellantriebs, der vergleichsweise mit hoher Funktionssicherheit bei leichtgängiger Bewegung mit geringer Geräuschentwicklung kostengünstig herstellbar ist, so dass damit auch insgesamt ein Flugzeugsitz mit regelmäßig einer Mehrzahl von verbauten Stellentrieben, insgesamt kostengünstiger und effektiver herstellbar und betreibbar wird.

In einer bevorzugten konstruktiven Ausgestaltung weist die Spindelmutter für einen Drehantrieb am Außenumfang als Schneckenrad eine Schneckenradverzahnung auf. Eine Motorabtriebwelle des Elektromotors ist mit einer Schnecke drehverbunden, die ihrerseits in die Schneckenradverzahnung zum Antrieb der Spindelmutter eingreift. Vorzugsweise ist dabei die Motorabtriebwelle mit der Schnecke senkrecht zur Gewindespindel und zur Gewindemutterachse ausgerichtet. Insbesondere bei Verwendung eines bürstenlosen Elektromotors in Flachläuferbauweise kann damit ein vorteilhaft kleinbauender, effektiv betreibbarer Drehantrieb für die Spindelmutter und damit für den gesamten Stellantrieb realisiert werden, wodurch Konstruktionsfreiräume für geeignete Anordnungen und Montagen im Flugzeugsitz bestehen.

In einer bevorzugten konkretisierten Ausbildung ist das Käfiggehäuse mit einem quaderförmigen Außenstrukturteil ausgebildet, wobei die beidseitige Abstützung der Spindelmutter im Käfiggehäuse durch zwei Spindelmutter-Gegenlagerteile erfolgt, die zu beiden Seiten der Spindelmutter in das Käfiggehäuse eingesetzt sind und die an in Spindelachsrichtung gegenüberliegenden Abstütz-Strukturwänden des Außenstrukturteils zur Abstützung von Spindelmutter-Seitenkräften anliegen. Die Spindelmutter-Gegenlagerteile und die Abstütz-Strukturwände weisen dabei Durchgangsöffnungen für die Gewindespindel auf.

Zwischen den Spindelmutter-Gegenlagerteilen und der Spindelmutter können noch Scheibenlager als Beilagscheiben angeordnet sein.

Anstelle von Stahlkugellagern oder Stahlnadellagern werden Gleitlager aus Kunststoff verwendet, in dem sowohl die Spindellager als auch die Spindelmutter-Gegenlagerteile und gegebenenfalls Scheibenlager aus Kunststoff hergestellt sind, wodurch einerseits eine gute Leichtgängigkeit in Verbindung mit einer Wartungsfreiheit bei geringer Geräuschentwicklung erreicht wird. Insbesondere treten vorteilhaft auch bei einer zeitlich längeren Nichtbetätigung und/oder Ersatzteilhaltung des beanspruchten Stellantriebs keine korrosionsbedingten Probleme mit Schwergängigkeit oder Blockade auf.

Die mit der Motorabtriebswelle verbundene, zur Kämmung mit der Schneckenradverzahnung der Spindelmutter in das Käfiggehäuse ragende Schnecke wird vorteilhaft mittels in Radialrichtung beidseitig in das Käfiggehäuse eingesetzten und fixierten Schnecken-Gegenlagerteilen gelagert, die die Schnecke an endseitig zylindrisch gestalteten Schneckenendbereichen miteinander zugeordneten Lagerhalbschalen umschließen und lagern. Auch hier sollen mit den gleichen vorstehend bei der Spindellagerung aufgezeigten Vorteilen die Schneckenlagerteile aus Kunststoff gefertigt sein. Konkret soll dabei ein Schneckengegenlagerteil als Lagerbock ausgebildet sein, der an gegenüberliegenden Lagernbockholmen Lagerhalbschalen-Ausformungen zur Einlage der beiden gegenüberliegenden zylindrischen Schneckenendbereiche aufweist, wobei der Lagerbock vorzugsweise durch eine offene Käfiggehäusewand in das Käfiggehäuse einsetzbar ist, die im fertig montierten Zustand durch eine Gehäuseabdeckung verschließbar ist.

Ein zweites zugeordnetes und U-förmig ausgebildetes Schnecken-Gegenlagerteil übergreift mit seinen U-Schenkeln die Spindelmutter, wobei an den U-SchenkelKanten Lagerhalbschalen-Ausformungen angebracht sind, die im montierten Zustand zusammen mit den zugeordneten Lagerhalbschalen-Ausformungen am Lagerbock die zylindrischen Schneckenendbereiche umschließen und lagern.

Vorzugsweise ist das U-förmige Schneckengegenlagerteil einteilig zusammen mit einem stirnseitigen Spindelmutter-Gegenlagerteil ausgebildet, wobei vorzugsweise das U-förmige Schnecken-Gegenlagerteil durch eine dem Lagerbock gegenüberliegende offene Käfiggehäusewand in das Käfiggehäuse einsetzbar ist und die U-Basis als Abdeckung für diese Käfiggehäusewand ausgebildet ist.

Die relativ komplizierte Gestalt der verwendeten Lagerteile kann vorteilhaft in Kunststoffspritztechnik oder Kunststoff 3D-Druck einfach und kostengünstig hergestellt werden.

In einer konstruktiv einfachen Ausgestaltung kann die Schnecke mit einem Schneckenendbereich durch eine Öffnung in einer Strukturwand aus dem Käfiggehäuse in ein ein- oder mehrteiliges, mit dem Käfiggehäuse verbundenes Motoradapterteil ragen. Über dieses Motoradapterteil ist der Elektromotor mit dem Käfiggehäuse fest verbunden, wobei die Schnecke mit ihrem Schneckenendbereich mit der Motorabtriebswelle koaxial und verdehfest im Motoradapterteil, vorzugsweise mit einer Aufpressverbindung verbunden ist.

Die Außenstruktur des Käfiggehäuses weist zweckmäßig Anschlusselemente, beispielsweise Anschlusslaschen, zur Herstellung einer verdrehfesten Abstützverbindung mit einem Sitzmodulkörper oder mit einem anderen Sitzelement auf.

Zudem ist an einem Spindelende ein Anschlusselement, vorzugsweise ein Gabelkopf zur Herstellung einer verdrehfesten Abstützverbindung mit dem Sitzmodulkörper, insbesondere mit einem Sitzgestell oder mit einem Sitzelement gegenüberliegend zur Abstützverbindung des Käfiggehäuses angeordnet. Am anderen Spindelende kann zudem eine Stopp-Mutter als Endelement aufgeschraubt sein.

In einer besonders bevorzugten Ausführungsform ist das Käfiggehäuse als Außenstrukturteil aus Metall hergestellt ebenso wie die Gewindespindel, so dass der Kraftverlauf im Wesentlichen über hochbelastbare Metallteile verläuft, wobei jedoch die unbewegten Gegenlager der Gewindespindel, der Spindelmutter und der Schnecke sowie die Spindelmutter und gegebenenfalls ein Gehäuseadapterteil sowie Gehäuseabdeckungen aus Kunststoff hergestellt sind.

Die Übersetzung Spindelmutter zu Gewindespindel kann je nach Ausführungsform selbsthemmend oder nicht selbsthemmend ausgeführt sein. Unabhängig davon kann und sollte der gesamte Stellantrieb immer selbsthemmend sein, zum Beispiel durch einen geringen Wirkungsgrad der Schneckenübersetzung.

Somit ist in einer Ausführungsform die Übersetzung Spindelmutter zu Gewindespindel, insbesondere mit an sich bekannter Gewindeausbildungen, selbsthemmend ausgebildet, so dass durch eine äußere Axialkraft unabhängig vom elektromotorischen Antrieb die Gewindespindel nicht axial verschiebbar ist.

In einer speziellen Ausführungsform ist die Schneckengetriebeübersetzung des Stellantriebs mit Selbsthemmung, die Gewindespindelübersetzung jedoch ohne Selbsthemmung ausgebildet. Zudem ist eine einfache, kostengünstige und funktionssichere Entriegelungseinrichtung realisiert, die es ermöglicht, insbesondere bei einem Fehler in der Sitzverstellsteuerung oder bei Service-Arbeiten, eine von der Stromversorgung unabhängige manuelle Verstellung durchzuführen. Dazu ist als Entriegelungseinrichtung zwischen dem im montierten Zustand rotationsfreien Anschlusselement, insbesondere einem Gabelkopf, an der Gewindespindel und dem Spindelende eine Kupplungsvorrichtung mit einer mechanisch betätigbaren Kupplung angeordnet. Im normalen fehlerfreien Betrieb ist diese Kupplung geschlossen und hemmt eine Rotation der Gewindespindel bezüglich des Anschlusselements. Im Entriegelungszustand bei offener Kupplung wird dagegen eine Rotation der Gewindespindel bezüglich des Anschlusselements freigegeben. Die Kupplungsvorrichtung soll aber mit wenigstens einem Verbindungsteil in der offenen und der geschlossenen Kupplungsstellung das Anschlusselement und das gegebenenfalls drehende Spindelende verbinden.

Da hier die Gewindespindelübersetzung des Stellantrieb ohne Selbsthemmung ausgebildet sein soll, ist bei offener Kupplung durch eine äußere Axialkraft die dann rotierende Gewindespindel mit dem nicht rotierenden Anschlusselement bezüglich der Spindelmutter und des Käfiggehäuses unabhängig vom elektromotorischen Antrieb für eine Sitzverstellung verschiebbar.

Ausdrücklich wird hervorgehoben, dass hier die Entriegelungseinrichtung, anders als bei bekannten Einrichtungen nicht beim Antrieb, sondern am Gewindespindelende, das heißt im bewegten Teil des Stellantriebs angeordnet ist. Dies hat insbesondere den Vorteil kurzer Wege, wenn das Käfiggehäuse mit Antrieb im Inneren des Sitzes verbaut ist und der Entriegelungshebel außen im bewegten Element angeordnet ist.

Wenn das Anschlusselement als Gabelkopf ausgebildet ist, kann dort in einer besonders kleinbauenden, funktionssicheren und nach außen hin abgedeckten Ausführungsform die Entriegelungseinrichtung untergebracht werden. Dazu ist im Endbereich der Gewindespindel eine fest verbundene Gewindekappe angeordnet und der Gabelkopf weist einen Rohrfortsatz auf, der diese Gewindekappe übergreift und mit dieser verdrehbar, das heißt auch bei drehender Gewindespindel und Gewindekappe, verbunden ist. Ein erstes Kupplungselement der Kupplung ist als Kupplungsringteil am Spindelende verdrehfest mit der Gewindespindel, insbesondere mit der Gewindekappe verbunden. Das Kupplungsringteil stützt sich umfangsseitig über eine aufgesetzte Lagerbuchse als Radialgleitlager aus Kunststoff an einem Innenflächenbereich des Rohrfortsatzes verdrehbar ab.

Anschließend an das erste Kupplungsringteil ist ein zweites Kupplungsringteil mechanisch geführt verschiebbar angeordnet, welches stirnseitig eine Eingriffstruktur, vorzugsweise mit Eingriffnasen, aufweist, die auf eine zugeordnete Gegenstruktur, vorzugsweise als Eingriffausnehmungen an einer Stirnseite des ersten Kupplungsringteils hin gerichtet ist.

Das zweite Kupplungsringteil ist mit einer Druckfeder auf das erste Kupplungsringteil hin vorgespannt, wobei in einer Verriegelungsposition mit geschlossener Kupplung die Eingriffstruktur in die Gegenstruktur für eine Rotationshemmung der Gewindespindel eingreift. Das zweite Kupplungsringteil ist mittels einer manuell bedienbaren Betätigungseinrichtung gegen die Kraft der Druckfeder mindestens so weit verschiebbar, dass bei dann offener Kupplung die Eingriffstruktur und Gegenstruktur außer Eingriff für eine Rotationsfreigabe der Gewindespindel kommen.

In einer weiter konkretisierten bevorzugten Ausbildung der Betätigungseinrichtung für das zweite Kupplungsringteil soll diese einen Betätigungsstift aufweisen, der radial durch den Rohrfortsatz des Gabelkopfs und das verschiebbare zweite Kupplungsringteil gesteckt ist, und der aus dem Rohrfortsatz von außen zugänglich ein- oder beidseitig mit einem Stiftüberstand herausragt. Dabei soll der Betätigungsstift im Rohrfortsatz jeweils durch zugeordnete, den Verschiebeweg begrenzende, axial ausgerichtete Langlöcher und im zweiten Kupplungsringteil durch eine Bohrung geführt sein. Der Betätigungsstift soll am Stiftüberstand manuell für eine Entriegelung zugänglich und/oder eine Fernbedienung, insbesondere mittels eines Bowdenzugs, angeschlossen sein.

Anhand einer Zeichnung wird die Erfindung anhand von beispielhaften Ausführungsformen weiter erläutert.

Es zeigen:
- Figur 1: einen Passagier-Flugzeugsitz als Doppelsitz in perspektivischer Ansicht,
- Figur 2: die Rückseite des Passagier-Flugzeugsitzes nach Figur 1,
- Figur 3: eine schematische Seitenansicht des Flugzeugsitzes nach Figur 1 mit unterschiedlichen Stellungen von Sitzelementen,
- Figur 4: eine schematische Seitenansicht des Sitzgestells des Passagier-Flugzeugsitzes nach Figur 1 mit einer schematischen, beispielhaften Anordnung von zwei Stellantrieben,
- Figur 5: eine perspektivische Ansicht eines fertig montierten Stellantriebs,
- Figur 6: eine Gewindespindel mit aufgesetzter Spindelmutter des Stellantriebs nach Figur 5,
- Figur 7: die Anordnung nach Figur 6 mit ergänztem elektromotorischen Schneckenantrieb,
- Figur 8: einen Längsschnitt des Stellantriebs nach Figur 5 im Bereich eines Käfiggehäuses,
- Figur 9: einen Querschnitt im Bereich eines Käfiggehäuses,
- Figur 10: eine perspektivische Ansicht eines fertig montierten Käfiggehäuses,
- Figur 11: eine perspektivische Explosionsdarstellung eines Stellantriebs ohne Entriegelungsvorrichtung,
- Figur 12: eine der Figur 11 entsprechende Explosionsdarstellung, jedoch mit einer Entriegelungsvorrichtung,
- Figur 13: einen Längsschnitt durch die Entriegelungseinrichtung mit geschlossener Kupplung, und
- Figur 14: einen Längsschnitt durch die Entriegelungseinrichtung mit geöffneter Kupplung.

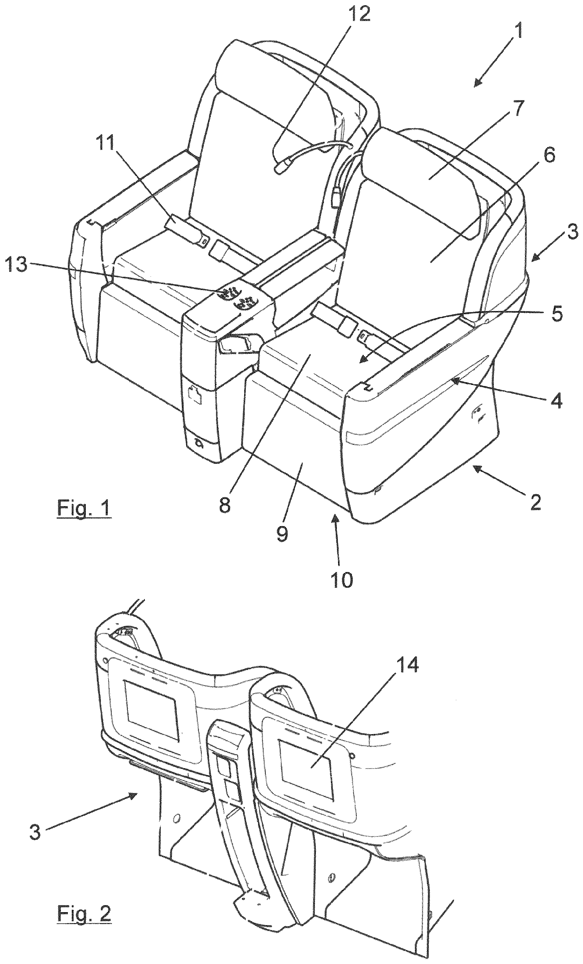

In Figur 1 ist ein Passagier-Flugzeugsitz 1 als Doppelsitz von vorne in perspektivischer Darstellung gezeigt mit jeweils einem Sitzmodulkörper 2 mit einer Rückwand 3, Seitenwangen 4 und einer Sitzauflagewand 5. Im Bereich zwischen den Seitenwangen 4 und der Rückwand 3 sind verlagerbare Sitzelemente als Polsterelemente mit einem Rückenlehnenelement 6 mit einem Kopfstützenelement 7 sowie einem Sitzelement 8 mit nach unten angeschlossenem Beinablageelement 9 mit einer Fußstütze 10 angeordnet.

Weiter sind Sicherheitsgurte 11, Leselampen 12 und Bedienfelder 13 für die Sitzelementverstellung neben weiteren Einzelheiten eingezeichnet.

In Figur 2 sind an der Rückseite der Rückwand 3 angeordnete Monitore 14 dargestellt.

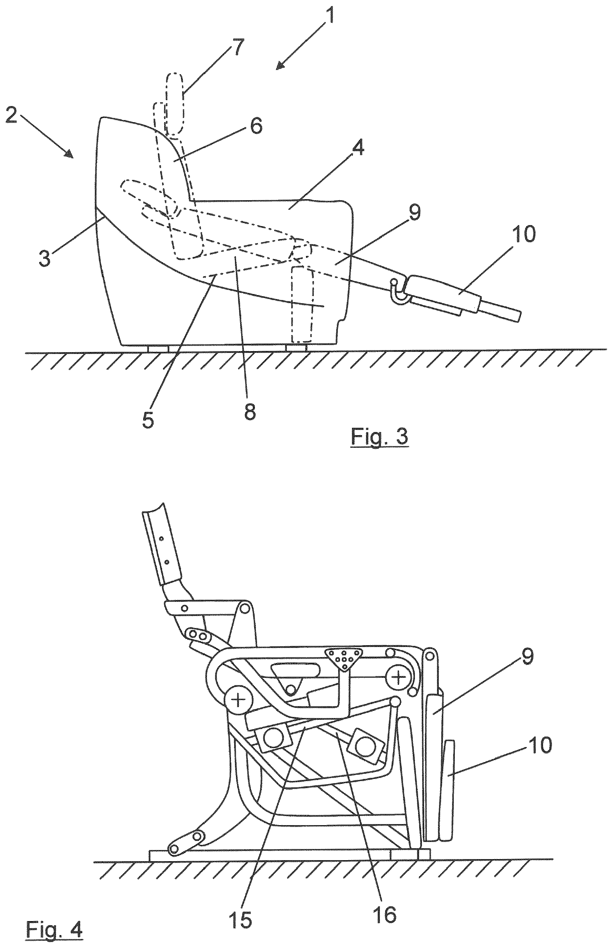

In Figur 3 ist die Anordnung der Sitzelemente 6, 7, 8, 9, 10 mit einer strichpunktierten Linie in der normalen Sitzposition gezeichnet. Durch gesteuerte elektromotorisch antreibbare Stellantriebe kann diese Sitzelementposition bis zu einer langgestreckten Ausrichtung der Sitzelemente für die eingezeichnete Liegeposition verstellt werden.

In Figur 4 ist ein Sitzgestell als unterer Fußteilbereich des Sitzmodulkörpers 2 ohne Verkleidung gezeigt, in dem für die Sitzelementverstellung die Mechanik mit Hebeln und Gelenken teilweise schematisch eingezeichnet ist. Zudem sind hier beispielhaft und stark schematisiert zwei Stellantriebe 15, 16 von gegebenenfalls insgesamt mehreren weiteren Stellantrieben eingezeichnet.

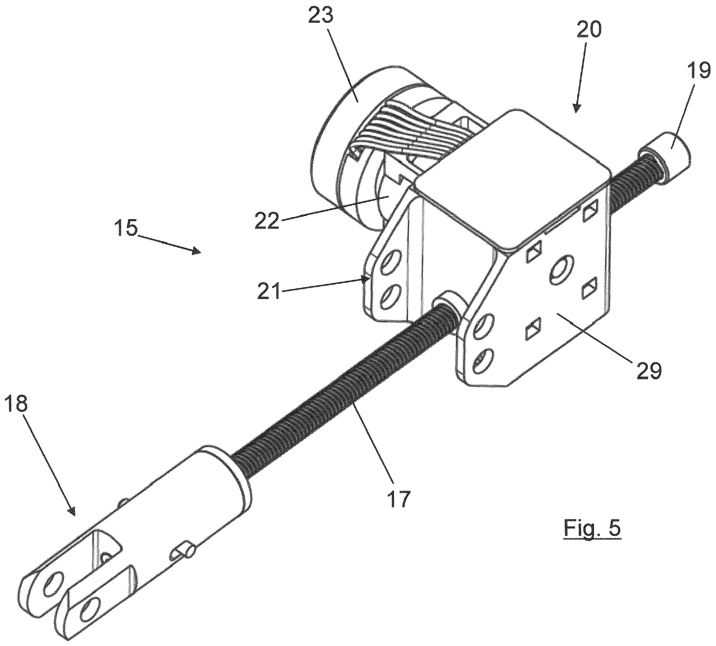

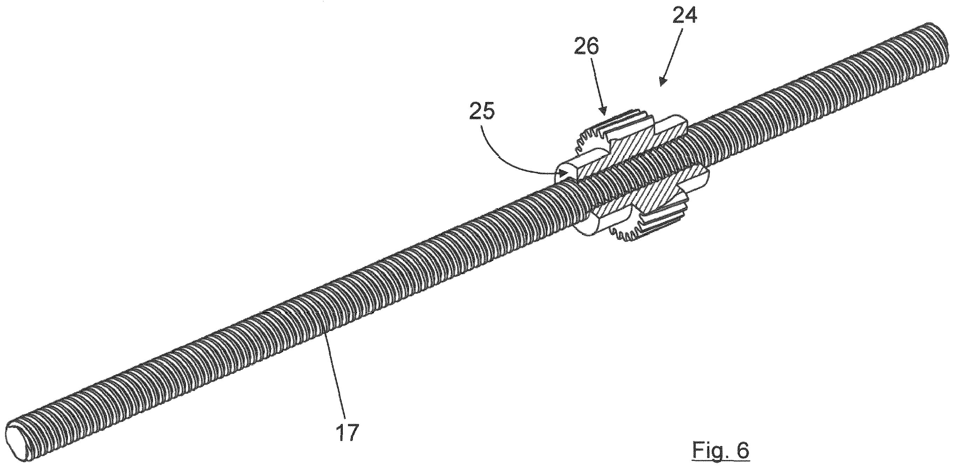

In Figur 5 ist ein solcher fertig montierter Stellantrieb 15 perspektivisch gezeigt mit einer Gewindespindel 17 aus Stahl mit einem Trapezgewinde, einem endseitigen Anschlusselement als Gabelkopf 18 und einer Stopp-Mutter 19 an der anderen Endseite der Gewindespindel 17. Die Gewindespindel ist durch ein Käfiggehäuse 20 geführt, welches Anschlusslaschen 21 als Abschlussverbindungen aufweist. Am Käfiggehäuse 20 ist zudem über ein Motoradapterteil 22 ein Elektromotor 23 als bürstenloser Motor in Flachläuferbauweise angeschlossen. In Figur 6 ist wieder die Gewindespindel 17 dargestellt mit einer aufgesetzten Spindelmutter 24, die im Käfiggehäuse 20 aufgenommen ist, mit einem der Gewindespindel zugeordneten Innengewinde 25 und einer Schneckenradverzahnung 26 am Außenumfang, so dass die Spindelmutter zudem die Funktion eines Schneckenrads aufweist.

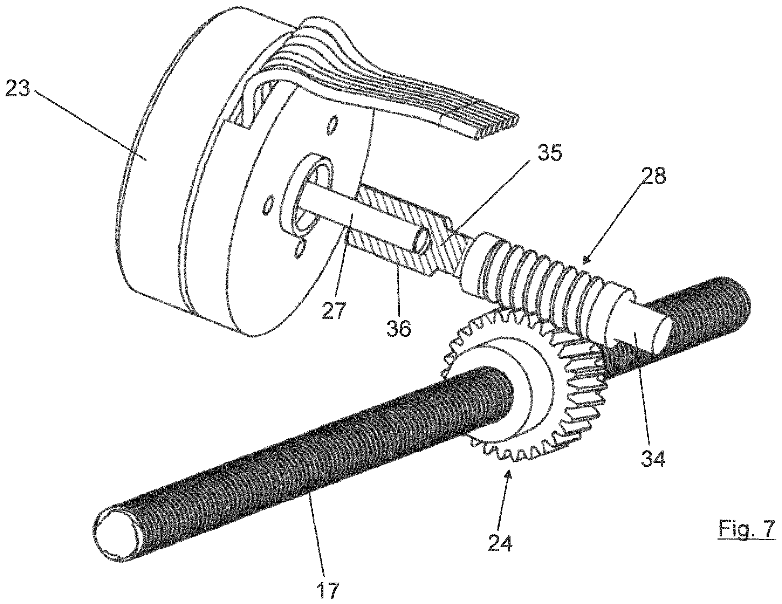

In Figur 7 ist wieder die Gewindespindel 17 mit der Spindelmutter 24 entsprechend Figur 6 dargestellt und zusätzlich der Elektromotor 23 mit seiner Abtriebwelle 27 gezeigt, die koaxial über eine Pressverbindung mit einer Schnecke 28 verbunden ist, die mit ihrer Verzahnung in die Schneckenradverzahnung 26 der Spindelmutter 24 für einen Drehantrieb eingreift.

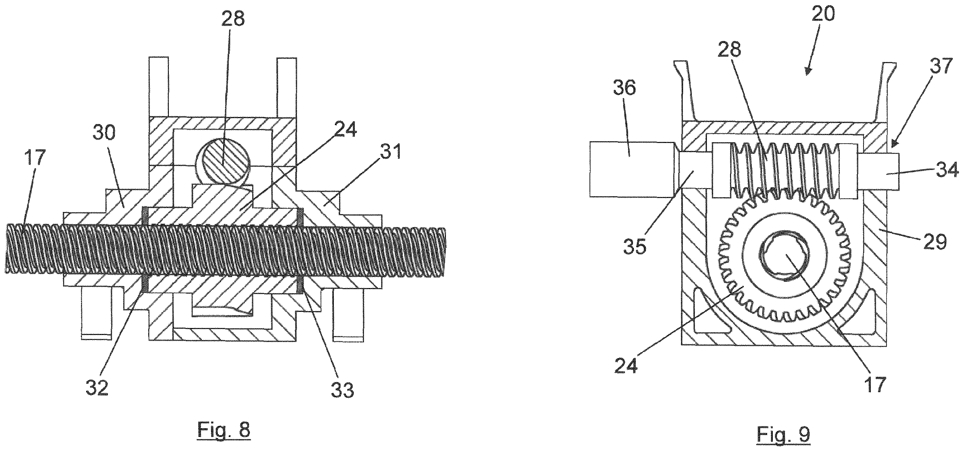

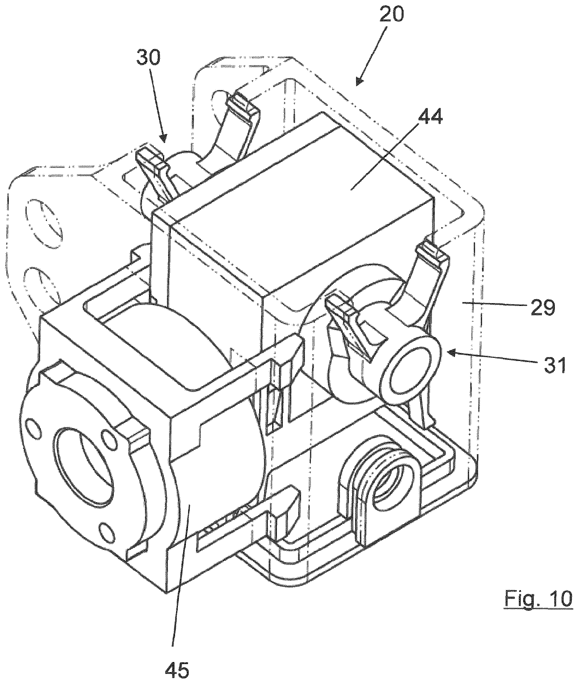

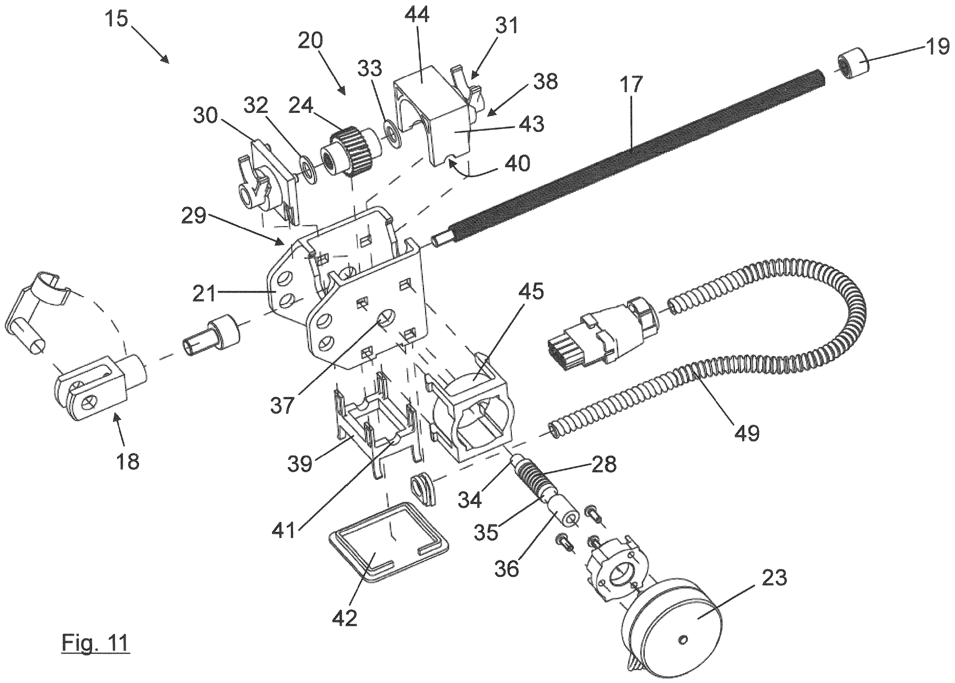

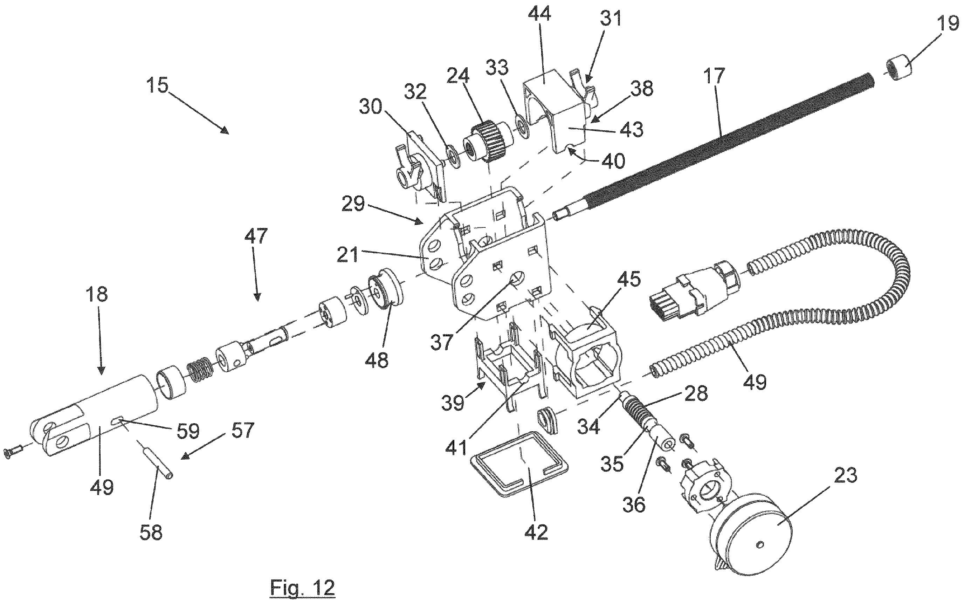

Im Längsschnitt nach Figur 8 ist die Lagerung und Abstützung der Spindelmutter 24 dargestellt, wobei das beispielsweise aus den Figuren 11 und 12 ersichtliche metallische Außenstrukturteil 29 des Käfiggehäuses 20 in Figur 8 noch weggelassen ist. Eine beidseitige Abstützung der Spindelmutter 24 im Käfiggehäuse erfolgt durch zwei Spindelmuttergegenlagerteile 30, 31, die zu beiden Seiten der Spindelmutter in das Käfiggehäuse bzw. in das Außenstrukturteil 29 eingesetzt sind und die jeweils in Achsrichtung der Gewindespindel 17 an gegenüberliegenden Abstütz-Strukturwänden des Käfiggehäuses bzw. des Außenstrukturteils 29 zur Abstützung von Spindelmutterseitenkräften anliegen (siehe Figur 10, 11, 12), wobei die Spindelmutter-Gegenlagerteile 30, 31 ebenso wie die Abstützstrukturwände Durchgangsöffnungen für die Gewindespindel 17 aufweisen. Zwischen den Spindelmutter-Gegenlagerteilen 30, 31 und der Spindelmutter 24 sind Scheibenlager 32, 33 als Beilagscheiben angeordnet. Zudem ist in Figur 8 ein Querschnitt durch die Schnecke 28 ersichtlich mit ihrem Eingriff in die Spindelmutter 24.

In Figur 9 ist ein Querschnitt durch das Käfiggehäuse 20 im Bereich der Schnecke 28 dargestellt, wobei schematisch das Außenstrukturteil 29 sowie die Spindelmutter 24 und die Gewindespindel 17 dargestellt sind. Die Schnecke 28 weist für eine Lagerung jeweils einen zylindrischen Endbereich 34, 35 auf, der an einem Endbereich in eine Anschlussbuchse 36 für eine Pressverbindung mit der Motorabtriebswelle 27 übergeht. Die Schnecke 28 ist mit ihren zylindrischen Endbereichen 34, 35 durch Öffnungen des Käfiggehäuses 20 bzw. des Außenstrukturteils 29 geführt.

Die genaue Schneckenlagerung im Käfiggehäuse 20 wird anhand der Figuren 11 und 12 näher erläutert:
Die Lagerung erfolgt mittels in Radialrichtung beidseitig in das Käfiggehäuse 20 bzw. in dessen Außenstrukturteil 29 eingesetzte und fixierte Schnecken-Gegenlagerteile 38, 39, die die Schnecke an den zylindrischen Schneckenendbereichen 34, 35 mit zugeordneten Lagerhalbschalen 40, 41 umschließen.

Dabei ist ein Schnecken-Gegenlagerteil 39 als Lagerbock ausgebildet, der an gegenüberliegenden Lagerbockholmen die Ausformungen der Lagerhalbschalen 41 zur Einlage der beiden gegenüberliegenden zylindrischen Schneckenendbereiche 34, 35 aufweist. Das Schnecken-Gegenlagerteil 39 als Lagerbock ist durch eine offene Käfiggehäusewand (hier von unten) in das Käfiggehäuse 20 bzw. das Außenstrukturteil 29 einsetzbar, wobei diese Gehäusewand im fertig montierten Zustand durch eine Gehäuseabdeckung 42 verschließbar ist. Ein zweites zugeordnetes und U-förmig ausgebildetes Schnecken-Gegenlagerteil 38 übergreift mit seinen U-Schenkeln 43 die Spindelmutter 24, wobei an den U-Schenkelkanten Ausformungen für die Lagerhalbschalen 40 angebracht sind, die zusammen mit den Lagerhalbschalen 41 am Lagerbock 39 die zylindrischen Schneckenendbereiche 34, 35 umschließen und lagern.

Das U-förmige Schnecken-Gegenlagerteil 38 ist hier einteilig zusammen mit dem Spindelmutter-Gegenlagerteil 31 ausgebildet und durch eine offene Käfiggehäusewand (hier von oben) in das Käfiggehäuse 20 bzw. das Außenstrukturteil 29 eingesetzt, wobei die U-Basis 44 als Abdeckung für die Käfiggehäusewand ausgebildet ist, wie dies auch aus Figur 10 ersichtlich ist.

In Figur 10 ist das Käfiggehäuse 20 mit den Spindelmutter-Gegenlagerteilen 30, 31 als Kunststoffteile perspektivisch dargestellt, die von dem strichliert eingezeichneten Außenstrukturteil 29 umfasst sind. Am Außenstrukturteil ist zudem ein Motoradapterteil 45 eingeklipst, wie dies auch aus den Explosionsdarstellungen nach Figur 11 und 12 entnommen werden kann. Mit dem Motoradapterteil 45 wird einerseits der Elektromotor 23 am Käfiggehäuse 20 befestigt und zudem ist darin die Verbindung zwischen der Motorabtriebwelle 27 und der Schnecke 28 bzw. deren Anschlussbuchse 36 aufgenommen. In den Figuren 11 und 12 ist zudem schematisch eine elektrische Leitung 46 für die Energieversorgung und Steuerung des Elektromotors 23 eingezeichnet.

Der in den Figuren dargestellte Stellantrieb 15 hat folgende Funktion: die Gewindespindel 17 ist an einem Spindelende mit einem Anschlusselement als Gabelkopf 18 rotationshemmend an einer Abstützverbindung beispielsweise an einem Sitzgestellt eines Sitzmodulkörpers angeschlossen. Zudem ist das Käfiggehäuse 20 über die Anschlusslaschen 21 mit seinem Außenstrukturteil 29 an einer weiteren Abstützverbindung für eine Relativverschiebung rotationsfrei angeschlossen. Bei einer Drehung der beidseitig abgestützten Spindelmutter 24 im Käfiggehäuse 20 wird die rotationsfreie Gewindespindel 17 je nach Drehrichtung der Spindelmutter aus dem Käfiggehäuse 20 ausgefahren oder durch das Käfiggehäuse 20 eingefahren.

In Figur 11 ist beispielsweise eine Ausführungsform eines Stellantriebs 15 gezeigt, der mit an sich bekannten Maßnahmen die Gewindespindelübersetzung selbsthemmend ausgebildet ist, so dass die Gewindespindel durch eine äußere Axialkraft unabhängig vom elektromotorischen Antrieb nicht axial verschiebbar ist.

Dagegen soll die in Figur 2 dargestellte beispielhafte Ausführungsform des Stellantriebs 15 die Gewindespindelübersetzung ohne Selbsthemmung ausgebildet sein, so dass eine freie rotierbare Gewindespindel 17 durch eine äußere Axialkraft bezüglich der Spindelmutter 24 und des Käfiggehäuses 20 verschiebbar ist. Damit ist bei dieser Ausführungsform eine Entriegelungseinrichtung 47 realisierbar, mit einer betätigbaren Entkopplung des verdrehfesten Gabelkopfs 18 zur Rotationsfreigabe der Gewindespindel 17. Die Entriegelungseinrichtung 47 ist in und mit dem Gabelkopf 18 ausgebildet und deren Aufbau ist aus den Figuren 12, 13 und 14 ersichtlich.

Dazu ist im Endbereich der Gewindespindel 17 eine Gewindekappe 48 angeschlossen und der Gabelkopf 18 weist einen Rohrfortsatz 49 auf, der die Gewindekappe 48 übergreift und mit dieser auch bei verdrehbarer Gewindekappe 48 und drehender Gewindespindel 17 verbunden ist, indem er in eine umlaufende Nut der Gewindekappe 49 eingreift.

Zur Ausbildung einer lösbaren Kupplung 40 ist ein erstes Kupplungsringteil 51 verdrehfest mit der Gewindekappe 48 verbunden. Dieses erste Kupplungsringteil 51 stützt sich umfangsseitig über eine aufgesetzte Lagerbuchse 52 als Radialgleitlager aus Kunststoff an einem Innenflächenbereich des Rohrfortsatzes 49 verdrehbar ab.

Anschließend an das erste Kupplungsringteil 51 ist ein zweites Kupplungsringteil 53 mechanisch geführt verschiebbar angeordnet, welches stirnseitig eine Eingriffstruktur als Eingriffnasen 54 aufweist, die auf eine zugeordnete Gegenstruktur mit Eingriffausnehmungen 55 am ersten Kupplungsringteil 51 hin gerichtet sind.

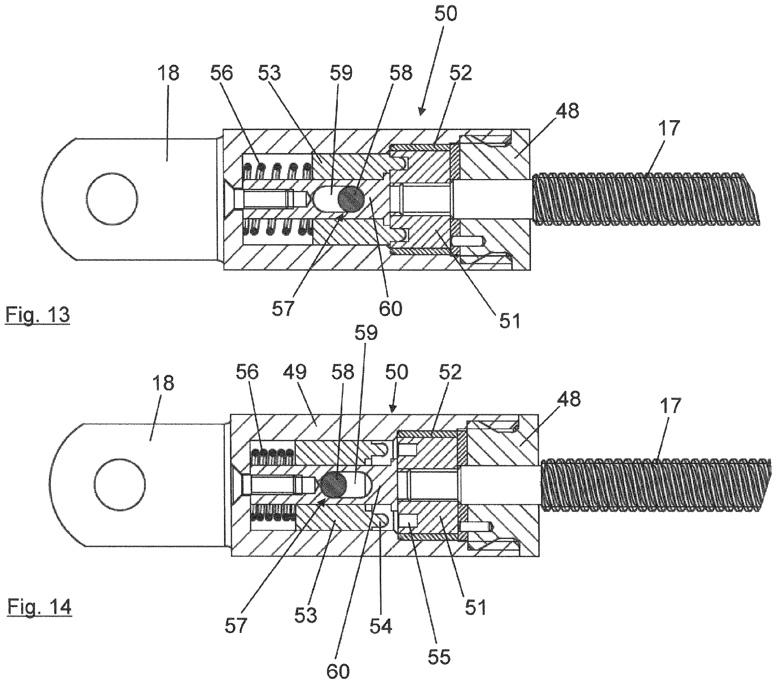

Das zweite Kupplungsringteil 53 ist mit einer Druckfeder 56 auf das erste Kupplungsringteil 51 hin vorgespannt, wobei in einer Verriegelungsposition für einen normalen Betrieb des Stellantriebs 16 die Eingriffsnasen 54 in die Eingriffausnehmungen 55 für eine Rotationshemmung der Gewindespindel 17 eingreifen, wie dies in Figur 13 dargestellt ist.

Das zweite Kupplungsringteil 53 kann mittels einer manuell bedienbaren Betätigungseinrichtung 57 gegen die Kraft der Druckfeder 56 mindestens so weit verschoben werden, dass bei dann offener Kupplung 50 die Eingriffnasen 54 außer Eingriff aus den Eingriffausnehmungen 55 ausrasten und damit trotz des rotationsfreien Gabelkopfs eine Rotationsfreigabe für die Gewindespindel 17 gegeben ist.

Die Betätigungseinrichtung für das zweite Kupplungsringteil 53 weist einen Betätigungsstift 58 auf, der radial durch den Rohrfortsatz 49 des Gabelkopfs 18 und durch das verschiebbare zweite Kupplungsringteil 53 gesteckt ist und der aus dem Rohrfortsatz 49 von außen zugänglich mit einem Stiftüberstand herausragt. Der Betätigungsstift 58 ist im Rohrfortsatz durch zugeordnete, den Verschiebeweg begrenzende und axial ausgerichtete Langlöcher 59 und durch eine Bohrung im zweiten Kupplungsringteil 53 geführt. Zudem kann ein den Betätigungsstift 58 in einem entsprechenden Langloch 59 führendes zentrales Führungsschienenteil 60 vorgesehen sein.

Der Betätigungsstift ist am Stiftüberstand von außerhalb des Gabelkopfs 18 zugänglich und für eine Entriegelung verschiebbar. Damit kann hier beispielsweise mit geeigneten Umlenkungen ein Seilzug mit einer Grifföse insbesondere in Form eines Bowdenzugs angeschlossen werden.

### Bezugszeichenliste

- 1: Passagier-Flugzeugsitz
- 2: Sitzmodulkörper
- 3: Rückwand
- 4: Seitenwangen
- 5: Sitzauflagewand
- 6: Rückenlehnenelement
- 7: Kopfstützenelement
- 8: Sitzelement
- 9: Beinablageelement
- 10: Fußstütze
- 11: Sicherheitsgurt
- 12: Leselampen
- 13: Betätigungsfelder
- 14: Monitor
- 15: Stellantrieb
- 16: Stellantrieb
- 17: Gewindespindel
- 18: Gabelkopf
- 19: Stopp-Mutter
- 20: Käfiggehäuse
- 21: Anschlusslaschen
- 22: Motoradapterteil
- 23: Elektromotor
- 24: Spindelmutter
- 25: Innengewinde
- 26: Schneckenradverzahnung
- 27: Abtriebwelle
- 28: Schnecke
- 29: Außenstrukturteil
- 30: Spindelmutter-Gegenlagerteil
- 31: Spindelmutter-Gegenlagerteil
- 32: Scheibenlager
- 33: Scheibenlager
- 34: Endbereich zylindrisch
- 35: Endbereich zylindrisch
- 36: Anschlussbuchse
- 37: Öffnung
- 38: Schnecken-Gegenlagerteil
- 39: Schnecken-Gegenlagerteil
- 40: Lagerhalbschalen
- 41: Lagerhalbschalen
- 42: Gehäuseabdeckung
- 43: U-Schenkel
- 44: U-Basis
- 45: Motoradapter
- 46: elektrische Leitung
- 47: Entriegelungseinrichtung
- 48: Gewindekappe
- 49: Rohrfortsatz
- 50: Kupplung
- 51: erstes Kupplungsringteil
- 52: Lagerbuchse
- 53: zweites Kupplungsringteil
- 54: Eingriffnasen
- 55: Eingriffausnehmungen
- 56: Druckfeder
- 57: Betätigungseinrichtung
- 58: Betätigungsstift
- 59: Langloch
- 60: Führungsschienenteil

## Patentansprüche

1. Flugzeugsitz, insbesondere Passagier-Flugzeugsitz (1), mit wenigstens einem verschiebbaren und/oder verkippbaren und/oder verdrehbaren Sitzelement (6, 7, 8, 9, 10), das mittels eines elektromotorisch antreibbaren Stellantriebs (15, 16) bezüglich eines Sitzmodulkörpers (2) oder bezüglich eines anderen zugeordneten Sitzelements in seiner Lage verstellbar ist durch eine relative Abstandsverstellung zwischen einer Abstützverbindung am verstellbaren Sitzelement und einer Abstützverbindung am Sitzmodulkörper (2) oder an einem anderen zugeordneten Sitzelement, wobei der Stellantrieb (15, 16) eine Gewindespindel (17) und eine Spindelmutter (24) aufweist, die relativ zueinander verstellbar sind,
**dadurch gekennzeichnet,**
**dass** die Gewindespindel (17) an einem Spindelende ein Anschlusselement (18) aufweist, mit dem die Gewindespindel (17) rotationshemmend an einer Abstützverbindung angeschlossen ist,
**dass** die auf die Gewindespindel (17) aufgeschraubte und elektromotorisch drehantreibbare Spindelmutter (24) in einem Käfiggehäuse (20) aufgenommen ist, das an einer dem Käfiggehäuse (20) zugeordneten weiteren Abstützverbindung rotationsfrei angeschlossen ist, und
**dass** die Spindelmutter (24) mittels eines Elektromotors (23) gesteuert im Käfiggehäuse (20) drehantreibbar ist und im Käfiggehäuse (20) beidseitig in Spindelaxialrichtung direkt oder indirekt abgestützt ist, so dass die Gewindespindel (17) rotationsfrei und bezüglich der Spindelmutter (24) ein- und ausfahrbar ist.

2. Flugzeugsitz nach Anspruch 1, **dadurch gekennzeichnet,**
**dass** die Spindelmutter (24) für einen Drehantrieb am Außenumfang als Schneckenrad eine Schneckenradverzahnung (26) aufweist, und
**dass** eine Motorabtriebwelle (27) des Elektromotors (23) mit einer Schnecke (28) drehverbunden ist, die in die Schneckenradverzahnung (26) zum Antrieb der Spindelmutter (24) eingreift.

3. Flugzeugsitz nach Anspruch 2, **dadurch gekennzeichnet, dass** die Motorabtriebwelle (27) mit der Schnecke (28) senkrecht zur Gewindespindel (17) und Spindelmutterachse ausgerichtet ist.

4. Flugzeugsitz nach Anspruch 1 oder 2, **dadurch gekennzeichnet,**
**dass** das Käfiggehäuse (20) mit einem quaderförmigen Außenstrukturteil (29) ausgebildet ist,
**dass** die beidseitige Abstützung der Spindelmutter (24) im Käfiggehäuse (20) durch zwei Spindelmutter-Gegenlagerteile (30, 31) erfolgt, die zu beiden Seiten der Spindelmutter (24) in das Außenstrukturteil (29) des Käfiggehäuses (20) eingesetzt sind und die an in Spindelachsrichtung gegenüberliegenden Abstütz-Strukturwänden des Außenstrukturteils (29) zur Abstützung von Spindelmutter-Seitenkräften anliegen, wobei die Spindelmutter-Gegenlagerteile (30, 31) und die Abstütz-Strukturwände Durchgangsöffnungen für die Gewindespindel (17) aufweisen.

5. Flugzeugsitz nach Anspruch 4, **dadurch gekennzeichnet, dass** zwischen den Spindelmutter-Gegenlagerteilen (30, 31) und der Spindelmutter (24) Scheibenlager (32, 33) als Beilagscheiben angeordnet sind.

6. Flugzeugsitz nach einem der Ansprüche 2 bis 5, **dadurch gekennzeichnet, dass** die Schnecke (28) im Käfiggehäuse (20) mittels in Radialrichtung beidseitig in das Käfiggehäuse (20) eingesetzten und fixierten Schnecken-Gegenlagerteilen (38, 39) gelagert ist, die die Schnecke (28) an endseitig zylindrisch gestalteten Schneckenendbereichen (34, 35) mit zugeordneten Lagerhalbschalen (40, 41) umschließen und lagern.

7. Flugzeugsitz nach Anspruch 6, **dadurch gekennzeichnet, dass** ein Schnecken-Gegenlagerteil (39) als Lagerbock ausgebildet ist, der an gegenüberliegenden Lagerbock-Holmen Lagerhalbschalen-Ausformungen (41) zur Einlage der beiden gegenüberliegenden zylindrischen Schneckenendbereiche (35, 36) aufweist, wobei der Lagerbock vorzugsweise durch eine offene Käfiggehäusewand in das Käfiggehäuse (20) einsetzbar ist, die durch eine Gehäuseabdeckung (42) verschließbar ist.

8. Flugzeugsitz nach Anspruch 7, **dadurch gekennzeichnet, dass** ein zweites zugeordnetes und U-förmig ausgebildetes Schnecken-Gegenlagerteil (38) mit seinen U-Schenkeln (43) die Spindelmutter (24) übergreifen und an den U-Schenkelkanten Lagerhalbschalen-Ausformungen (40) angebracht sind, die im montierten Zustand zusammen mit zugeordneten Lagerhalbschalen-Ausformungen (41) am Lagerbock (39) die zylindrischen Schneckenendbereiche (34, 35) umschließen und lagern.

9. Flugzeugsitz nach Anspruch 8, **dadurch gekennzeichnet, dass** das U-förmige Schnecken-Gegenlagerteil (38) einteilig zusammen mit einem stirnseitigen Spindelmutter-Gegenlagerteil (319 ausgebildet ist, wobei vorzugsweise das U-förmige Schnecken-Gegenlagerteil (38) durch eine dem Lagerbock (39) gegenüberliegende offene Käfiggehäusewand (20) einsetzbar ist und die U-Basis (44) als Abdeckung für diese Käfiggehäusewand ausgebildet ist.

10. Flugzeugsitz nach einem der Ansprüche 2 bis 9, **dadurch gekennzeichnet, dass** die Schnecke (28) mit einem Schneckenendbereich (36) durch eine Öffnung (37) in einer Strukturwand aus dem Käfiggehäuse (20) in ein ein- oder mehrteiliges, mit dem Käfiggehäuse (20) verbundenes Motoradapterteil (45) ragt, mit dem der Elektromotor (23) mit dem Käfiggehäuse (20) fest verbunden ist und in dem eine Motorabtriebwelle (27) koaxial und verdrehfest mit dem Schneckenendbereich (36) verbunden ist.

11. Flugzeugsitz nach einem der Ansprüche 1 bis 10, **dadurch gekennzeichnet, dass** das Außenstrukturteil (29) des Käfiggehäuses (20) Anschlusselemente (21) zur Herstellung einer verdrehfesten Abstützverbindung mit einem Sitzmodulkörper (2) oder mit einem anderen Sitzelement aufweist.

12. Flugzeugsitz nach einem der Ansprüche 1 bis 11, **dadurch gekennzeichnet, dass** an einem Spindelende ein Anschlusselement, vorzugsweise ein Gabelkopf (18) zur Herstellung einer verdrehfesten Abstützverbindung mit dem Sitzmodulkörper (2), insbesondere einem Sitzgestell, oder mit einem anderen Sitzelement aufweist, und/oder
dass am anderen Spindelende eine Stopp-Mutter (19) als Endelement aufgeschraubt ist.

13. Flugzeugsitz nach einem der Ansprüche 1 bis 12, **dadurch gekennzeichnet, dass** das Außenstrukturteil (29) des Käfiggehäuses (20) aus Metall hergestellt ist, und
dass die unbewegten Gegenlager der Gewindespindel (17), der Spindelmutter (24) und der Schnecke (28), sowie die Spindelmutter (24) und gegebenenfalls ein Motoradapterteil (45) und Gehäuseabdeckungen (42, 44) aus Kunststoff hergestellt sind.

14. Flugzeugsitz nach einem der Ansprüche 1 bis 13, **dadurch gekennzeichnet, dass** der Elektromotor (23) ein bürstenloser Motor in Flachläuferbauweise ist.

15. Flugzeugsitz nach einem der Ansprüche 1 bis 14, **dadurch gekennzeichnet, dass** die Gewindespindelübersetzung des Stellantriebs (15) selbsthemmend ausgebildet ist, so dass die Gewindespindel (17) durch eine äußere Axialkraft unabhängig vom elektromotorischen Antrieb nicht axial verschiebbar ist.

16. Flugzeugsitz nach einem der Ansprüche 1 bis 14, **dadurch gekennzeichnet, dass** die Gewindespindelübersetzung des Stellantriebs (15) ohne Selbsthemmung ausgebildet ist,
dass als Entriegelungseinrichtung (47) zwischen dem im montierten Zustand rotationsfreien Anschlusselement, insbesondere einem Gabelkopf (18), an der Gewindespindel (17) und dem Spindelende (48) eine Kupplungsvorrichtung mit einer mechanisch betätigbaren Kupplung (50) angeordnet ist, die bei geschlossener Kupplung (50) eine Rotation der Gewindespindel (17) bezüglich des Anschlusselements (18) hemmt und im Entriegelungszustand bei offener Kupplung (50) eine Rotation der Gewindespindel (17) bezüglich des Anschlusselements (18) freigibt, dass die Kupplungsvorrichtung mit wenigstens einem Verbindungsteil (48, 49) in der offenen und geschlossenen Kupplungsstellung das Anschlusselement (18) und das gegebenenfalls drehende Spindelende (48) verbindet, und
dass bei dem Stellantrieb (15) ohne Selbsthemmung bei offener Kupplung (50) durch eine äußere Axialkraft die dann rotierende Gewindespindel (17) mit dem nicht rotierenden Anschlusselement (18) bezüglich der Spindelmutter (24) und des Käfiggehäuses (20) unabhängig vom elektromotorischen Antrieb (23) verschiebbar ist.

17. Flugzeugsitz nach Anspruch 16, **dadurch gekennzeichnet,**
**dass** zur Ausbildung der Entriegelungseinrichtung (47) im Endbereich der Gewindespindel (17) eine Gewindekappe (48) angeordnet ist, und dass das Anschlusselement als Gabelkopf (18) einen Rohrfortsatz (49) aufweist, der die Gewindekappe (48) zumindest teilweise übergreift und mit dieser auch bei verdrehbarer Gewindekappe (48) verbunden ist,
**dass** ein erstes Kupplungselement der Kupplung als erstes Kupplungsringteil (51) am Spindelende verdrehfest mit der Gewindespindel (179, insbesondere mit der Gewindekappe (48), verbunden ist, das sich umfangsseitig über eine aufgesetzte Lagerbuchse (52) als Radialgleitlager aus Kunststoff an einem Innenflächenbereich des Rohrfortsatzes (49) verdrehbar abstützt, dass anschließend an das erste Kupplungsringteil (51) ein zweites Kupplungsringteil (53) mechanisch geführt verschiebbar angeordnet ist, welches stirnseitig eine Eingriffstruktur, vorzugsweise mit Eingriffnasen (53) aufweist, die auf eine zugeordnete Gegenstruktur, vorzugsweise als Eingriffausnehmungen (55), an einer Stirnseite des ersten Kupplungsringteils (51) hin gerichtet ist,
**dass** das zweite Kupplungsringteil (53) mit einer Druckfeder (56) auf das erste Kupplungsringteil (51) hin vorgespannt ist und in einer Verriegelungsposition mit geschlossener Kupplung die Eingriffstruktur (54) in die Gegenstruktur (55) für eine Rotationshemmung der Gewindespindel (17) eingreift,
**dass** das zweite Kupplungsringteil (53) mittels einer manuell bedienbaren Betätigungseinrichtung (57) gegen die Kraft der Druckfeder (56) mindestens so weit verschiebbar ist, dass bei dann offener Kupplung (50) die Eingriffstruktur (54) und Gegenstruktur (55) außer Eingriff für eine Rotationsfreigabe der Gewindespindel (17) kommen.

18. Flugzeugsitz nach Anspruch 17, **dadurch gekennzeichnet,**
**dass** die Betätigungseinrichtung (57) für das zweite Kupplungsringteil (54) einen Betätigungsstift (58) aufweist, der radial durch den Rohrfortsatz (49) des Gabelkopfs (18) und durch das verschiebbare zweite Kupplungsringteil (53) gesteckt ist und der aus dem Rohrfortsatz (49) von außen zugänglich, ein- oder beidseitig mit einem Stiftüberstand herausragt,
**dass** der Betätigungsstift (58) im Rohrfortsatz (49) durch zugeordnete, den Verschiebeweg begrenzende, axial ausgerichtete Langlöcher (59) und im zweiten Kupplungsringteil (53) durch eine Bohrung für eine Verschiebung geführt ist, und
**dass** der Betätigungsstift (58) am Stiftüberstand manuell zugänglich für eine Entriegelung verschiebbar ist und/oder eine Fernbedienung, insbesondere mittels eines Bowdenzugs, angeschlossen ist.
